# EUROPÄISCHE PATENTANMELDUNG

(11) **EP 4 704 282 A1**
(43) Veröffentlichungstag der Anmeldung: **04.03.2026**
(21) Anmeldenummer: 24196949.2
(22) Anmeldetag: 28.08.2024
(51) Int. Cl.: H02J 3/00, H02J 13/00

(54) **VERFAHREN ZUM ZUORDNEN EINER SCHUTZ-, STEUER- ODER AUTOMATISIERUNGSFUNKTION (SSAF) ZU EINEM PROZESSORKERN**

(71) Anmelder: Siemens Aktiengesellschaft, 80333 München (DE)
(72) Erfinder: Becker, Karsten, 15366 Neuenhagen (DE); Hurrelmann, Jonas, 13347 Berlin (DE); Kind, Roland, 14482 Potsdam (DE); Koplin, Kai, 14482 Potsdam (DE); Lerzer, Christoph, 90584 Allersberg (DE); Sommer, Dirk, 13053 Berlin (DE); Stollfuß, Marcus, 13467 Berlin (DE)
(74) Vertreter: Siemens Patent Attorneys

(57) **Zusammenfassung**

Die Erfindung betrifft ein Verfahren zum Schutz eines Elektroenergieversorgungsnetztes, zur Automatisierung von Vorgängen und zur Steuerung von Komponenten einer Anlage mit den Schritten: Erfassen wenigstens einer den Zustand des Elektroenergieversorgungsnetzes oder einer sonstigen Komponente der Anlage charakterisierenden Messgröße mittels Messsensoren unter Gewinnung von wenigstens einem Messsignal; Erzeugen von Messwerten aus jedem Messsignal; Weiterleiten der Messwerte an eine intelligente elektronische Einheit (IED) (1), die mehrere Prozessorkerne (2) aufweist, wobei jede IED (1) wenigstens einer Schutz-, Steuerungs- oder Automatisierungsfunktion (SSAF) (2) aufweist, und wobei eine Schutzfunktion die Messwerte auf das Vorliegen wenigstens einer Fehlerbedingungen hin untersucht und bei Vorliegen einer Fehlerbedingung ein Fehlersignal erzeugt, eine Automatisierungsfunktion zur Durchführung von Prozessen innerhalb der Anlage und eine Steuerungsfunktion zur Steurung von Komponenten innerhalb der Anlage eingerichtet sind. Um eine optimierte Auslastung der Rechenleistung dieses Rechensystems zu ermöglichen, wird vorgeschlagen, dass mit Hilfe eines Lastmodells für jede SSAF (2) ein Kernauslastungsgrad ermittelt wird, wobei jede Instanz einer SSAF (3) einem Prozessorkern (2) in Abhängigkeit ihres Kernauslasungsgrades zugeordnet wird.

## Beschreibung

Die Erfindung betrifft ein Verfahren zum Schutz eines Elektroenergieversorgungsnetztes, zur Automatisierung von Vorgängen und zur Steuerung von Komponenten einer Anlage mit den Schritten: Erfassen wenigstens einer den Zustand des Elektroenergieversorgungsnetzes oder einer sonstigen Komponente der Anlage charakterisierenden Messgröße mittels Messsensoren unter Gewinnung von wenigstens einem Messsignal; Erzeugen von Messwerten aus jedem Messsignal; Weiterleiten der Messwerte an eine intelligente elektronische Einheit (IED), die mehrere Prozessorkerne aufweist, wobei jede IED wenigstens eine Schutz-, Steuerungs- oder Automatisierungsfunktion (SSAF) aufweist, und wobei eine Schutzfunktion die Messwerte auf das Vorliegen wenigstens einer Fehlerbedingungen hin untersucht und bei Vorliegen einer Fehlerbedingung ein Fehlersignal erzeugt, eine Automatisierungsfunktion zur Durchführung von Prozessen innerhalb der Anlage und eine Steuerungsfunktion zur Steurung von Komponenten innerhalb der Anlage eingerichtet sind.

Ein solches Verfahren ist aus dem landläufigen Stand der Technik bereits bekannt. So wird beispielsweise in einem Umspannwerk an Messstellen eines Elektroenergieversorgungsnetz ein Storm an einem Abgang einer Sammelschiene des Elektroenergieversorgungsnetzes erfasst. Dies erfolgt durch sogenannte Messwandler, also Strom- oder Spannungswandlern, die ausgangsseitig ein analoges Messignal bereitstellen. Dieses Messignal wird an den Eingang einer Vorverarbeitungseinheit gelegt, die auch als Merging Unit bezeichnet wird. In der Vorverarbeitungseinheit wird das analoge Messsignal anschließend unter Gewinnung von Abtstwerten abgetastet und die so gewonnenen Abtast- oder Messwerte anschließend digitalisiert. Erfolgt die Abtastung an verschiedenen Stellen zeitsynchron, können die Messwerte auch als Zeigergrößen zusammengestellt und in Gestalt von Datentelegrammen an intelligente elektronische Geräte oder Einheiten (lEDs) übertragen werden.

Abweichend hiervon ist es auch möglich, dass eine IED einen Eingang für einen solchen Messensor aufweist und das Erzeugen der digitalen Messwerte von der IED selbst übernommen wird.

In diesen IEDs sind in der Regel mehrere Prozessorkerne angeordnet. Dabei wird jedem Prozessorkern ein Schutz-, Steuerungs- oder Automatisierungsalgorithmus oder -funktion zugeordnet. Ein Schutzalgorithmus führt eine Analyse beispielsweise dahin durch, ob anhand der erzeugten Messwerte eine Fehlerbedingung vorliegt. Im Falle einer Fehlerbedingung wird dann ein Fehlersignal erzeugt. Das Fehlersignal wird anschließend dann an einen Schalter weitergeleitet, der daraufhin den fehlerhaften Abschnitt des Elektroenergieversorgungsnetzes vom Rest abtrennt.

Aus dem Stand der Technik sind ferner zentrale Schutzeinheiten und zentrale Automatisierungseinheiten bekannt, die auch als CPC (Central Protection and Control) bezeichnet worden sind. Auch eine CPC verfügt über Schutz-, Steuer und Automatisierungsfunktionen (SSAF), die z.B. für die Überprüfung von Messwerte auf das Vorliegen einer Fehlerbedingung eingericht sind und/oder für das Ausführen von automatisierten Vorgängen oder die Steuerung von Komponenten einer Anlage zuständig sind.

Bislang wurden Instanzen der SSAF den Prozessorkernen individuell zugeordnet. Mit anderen Worten wurde eine Instanz der jeweiligen SSAF immer einem Prozessorkern zugeordnet. Dies führt jedoch zu einer nicht immer optimalen Auslastung der Rechenkapazität.

Aufgabe der Erfindung ist es daher ein Verfahren der eingangs genannten Art bereitzustellen, mit dem eine optimierte Auslastung der Rechenleistung des Rechensystems möglich ist.

Die Erfindung löst diese Aufgabe dadruch, dass mit Hilfe eines Lastmodells für jeden Prozessorkern ein Kernauslastungsgrad ermittelt wird und die Instanzen der jeweiligen Schutz-, Steuer- und Automatisierungsfunktionen (SSAFen) jedem Prozessorkernen in Abhängigkeit seines Kernauslastungsgrades zugeordnet werden.

Die Erfindung beruht auf der Idee, dass mit einem vordefinierten Lastmodell die Berechnungskosten für jede Instanz der SSAF beim Konfigurieren bestimmt werden können. Gemäß dem Stand der Technik wurden beispielsweise vier Instanzen von SSAFen auf jeweils einen Prozessorkerne verteilt, so dass jedem der vier Prozessorkerne jeweils eine Instanz zugeordnet war. Im Rahmen der Erfindung ist es jedoch möglich beispielsweise eine von vier Instanzen der SSAF einem Prozessorkern und die drei weiteren SSAF-Instanzen zusammen einem Prozessorkern zuzuordnen, so dass insgesamt nur zwei Prozessorkerne benutzt werden.

Unter einer Anlage kann in diesem Zusammenhang jede Form einer industriellen Anlage verstanden werden, z.B. eine elektrische Anlage, wie eine elektrische Schaltstation oder ein elektrisches Energieversorgungsnetz, eine Anlage zum Transport oder zur Verteilung von Feststoffen, Gas oder Flüssigkeiten oder aber auch eine chemische oder verfahrenstechnische Prozessanlage oder eine Produktionsanlage. Nachfolgend wird die Erfindung lediglich beispielhaft anhand einer elektrischen Anlage erläutert. Eine solche elektrische Anlage umfasst einzelne Komponenten, beispielsweise in Form von Leitungen, und Kabeln, Schaltern, Transformatoren, Generatoren, Motoren, Umrichtern, Lasten, elektrische Energieerzeuger oder dergleichen.

Vorteilhafterweise erfolgt das Zuordnen der Instanzen der Schutz- und Automatisierungsfunktionen mithilfe eines Knapsackalgorithmus. Der Knapsackalgorithmus ist dem Fachmann bestens bekannt, so dass Ausführungen darüber an dieser Stelle entfallen können.

Im Rahmen der Erfindung erfolgt die Zuordnung der Instanzen zu dem jeweiligen Prozessorkern vorteilhafterweise während der Konfiguration des Systems. Bei der Konfiguration des Systems werden die festgelegten Parameter verwendet um das Rechnersystems an die jeweils herrschenden Anforderungen anzupassen. Hierbei wird auch gleichzeitig überprüft, welche Belastung ein Prozessorkern übernimmt, wenn diesem die jeweilige Instanz einer der Schutz-, Steuer- und Automatisierungsfunktion zugeordnet wird.

Gemäß einer weiteren Ausgestaltung der Erfindung sind mehrere getrennt voneinander angeordnete IEDs vorgesehen, wobei die Prozessorkerne auf die IEDs verteilt angeordnet sind. Gemäß dieser Ausgestaltung der Erfindung wird die Zuordnung der Instanzen der Schutz-, Steuer- und Automatisierungsfunktionen bei einem verteilt aufgebauten System angewandt. Jede IED kann bei dieser vorteilhaften Weiterentwicklung der Erfindung jeweils ein Gehäuse aufweisen. Innerhalb des Gehäuses sind vorteilhafterweise ein oder mehrere Prozessorkerne angeordnet. Jede der IED verfügt über eine bestimmte Anzahl von SSAFen.

Die Zuordnung der SSAFen zu einer IED kann statisch vorgegeben sein. Gemäß einer hievor abweichenden Weiterentwicklung der vorliegenden Erfindung, werden die SSAF mittels eines Orchestrierungsverfahren den IEDs dynamisch zugeordnet. Die dynamische Zuordnung ermöglicht bei Ausfall einer IED, dass die SSAFen, die auf der funktionsuntüchtigen IED ausgeführt wurden, auf einer anderen funktionstüchtigen IED, die mit den gleichen Eingangsdaten wie die funktionsuntüchtige versorgt wird, zum Laufen gebracht werden. Ein längerer Ausfall der SSAF kann somit verhindert werden.

Bei einer bevorzugten Variante des erfindungsgemäßen Verfahrens sind die Prozessorkerne jedoch Teil einer zentralen Hardwareeinheit. Diese zentrale Hardwareeinheit verfügt über alle Schutz-, Steuer- und Automatisierungsfunktionen. Eine solche Hardwareeinheit wird auch als CPC oder Central-Protection-and-Control bezeichnet. Abweichend hiervon ist auch der Begriff Central CSC gebräuchlich, der im Englischen mit Central-System-and Computing bezeichnet wird.

Weitere Vorteile und Varianten der Erfindung sind Gegenstand der nachfolgenden Beschreibung mit Ausführunsbeispielen der Erfindung unter Bezugnahme auf die Figuren der Zeichnungen, wobei gleiche Bezugszeichen auf gleich wirkende Bauteile verweisen, und wobei
Fig. 1a und
Fig. 1b eine Darstellungen von Verfahren gemäß dem Stand der Technik und
Fig. 2 das erfindungsgemäße Verfahren schematisch verdeutlichen.

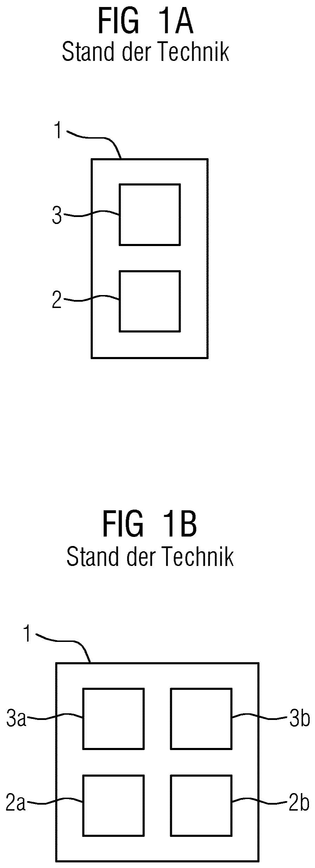

Fig. 1a zeigt eine IED 1, als Intelligent Electronical Device, mit einem Prozessorkern 2 sowie einer Instanz einer Schutz-, Steuer- und Automatisierungsfunktion (SSAF) 3. Gemäß dem Stand der Technik ist die besagte Instanz 2 dem Prozessorkern 2 fest zugeordnet.

Fig. 1b zeigt eine IED 1 mit zwei Prozessorkernen 2a und 2b und zwei Instanzen 3a und 3b unterschiedlicher SSAF. Bei der Instanz 3a handelt es sich beispielsweise um einen Distanzschutz und bei der anderen Instanz 3 um einen Differntialschutz. Die Instanz 3a ist dem Prozessorkern 2a und die Instanz 3b dem Prozessorkern 2b statisch zugeordnet. Der Prozessorkern 2a weist eine viel höhere Rechenleistung auf als von der Instanz 3a beanspruch wird. Gleiches gilt für den Prozessorkern 2b und der Instanz 3b. Gemäß dem Stand der Technik verbleiben daher Ressourcen an Rechenleistung ungenutzt.

Im Rahmen der der Erfindungs werden die Instanzen der Schutz-, Steuer- und Automatisierungsfunktionalgorithmen (SSAF), den jeweiligen Pozessorkernen nicht länger eins zu eins zugeordnet. Liegen beispielsweise vier SSAF-Instanzen und vier Prozessorkerne vor, können beispielsweise drei dieser SSAF-Instanzen einem Prozessorkern und die verbleibende vierte SSAF-Instanz einem vierten Prozessorkern zugeordnet werden.

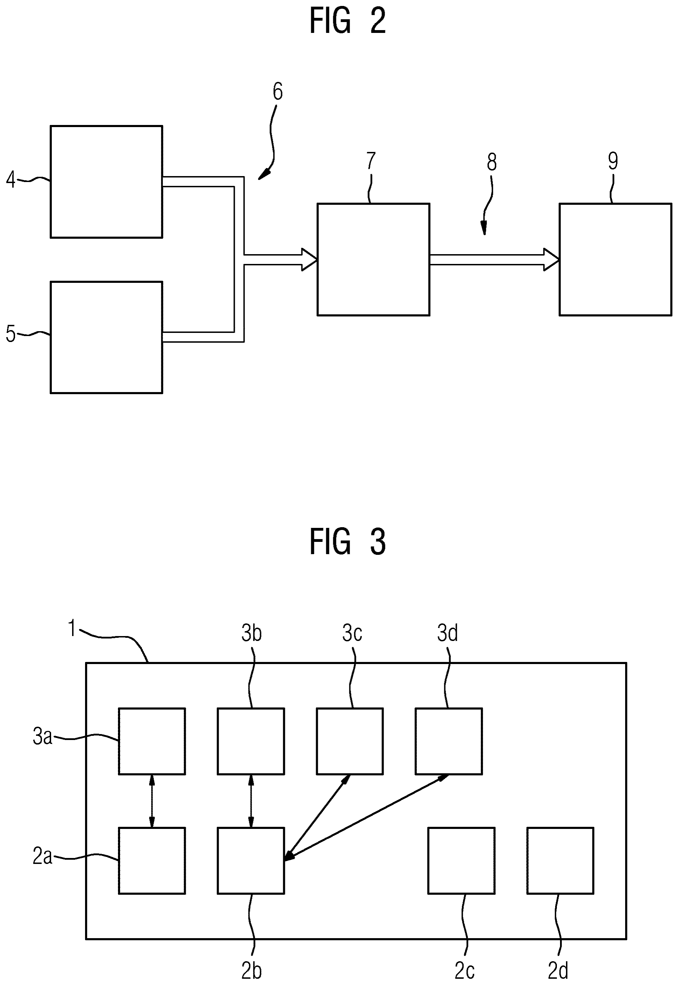

Fig. 2 zeigt eine schematische Darstellung des erfindungsgemäßen Verfahrens. Es ist erkennbar, dass bei der Konfiguration 4 einer, mehrerer oder aller IEDs einer elektrischen Anlage, die figürlich nicht dargestellt ist, die verfügbaren SSAF der IED jeweils einer Analyse gemäß einem Lastmodell 5 unterzogen werden. Mit anderen Worten wird untersucht, wieviel Rechenkapazität eine Instanz einer SSAF benötigen würde. Ein Ergebnis werden im Schritt 6 zusammengeführt. Im Schritt 7 wird schließlich der Kernauslastungsgrad der jeweiligen SSAF-Instanz festgeglet. Im Schritt 8 erfolgt die Zuordnung, das so genannte Mapping, dessen Ergebnis im Schritt 9 feststeht.

Figur 3 zeigt ein bereits zuvor grob umrissenes Ergebnis eines Ausführungsbeispiels des erfindungsgemäßen Verfahrens. So wird die SSAF-Instanz 3a, die viel Rechenkapazität beansprucht, dem Prozessorkenr 2a allein zugeordnet. Die weniger Leistung beanspruchenden SSAF-Instanzen 3b, 3c und 3d werden hingegen alle gemeinsam einem Porzessorkern - nämlich dem Prozessorkern 3b - zugeordnet. Die Prozessorkerne 3d und 3c können für andere Aufgaben genutzt werden oder können mit einer Kostenersprarnis im Gefolge bei der Herstellung der IED engespart werden.

Mit dem Lastmodell kann der Rechenaufwand für jede SSAF während der Konfigurationszeit bestimmt werden. Dies ermöglicht eine optimale Zuordnung jeder SSAF auf die verfügbaren Rechenressourcen. Das Lastmodell basiert auf einem Knapsack-Algorithmus, der die beste Anpassung der verwendeten SSAF an die verfügbaren Ressourcen an Prozessorkernen bereitstellt. Der Knapsack Algorithmus ist dem Fachmann jedoch bekannt, so dass weitere Ausführungen hierzu entfallsn können.

Das Lastmodell mit der Ressourcenzuordnung kann auch verwendet werden, um die erforderliche Hardware vor dem Kauf zu bestimmen z.B. mit Hilfe eines digitalen Zwillings.

## Patentansprüche

1. Verfahren zum Schutz eines Elektroenergieversorgungsnetztes, zur Automatisierung von Vorgängen und zur Steuerung von Komponenten einer Anlage mit den Schritten:
- Erfassen wenigstens einer den Zustand des Elektroenergieversorgungsnetzes oder einer sonstigen Komponente der Anlage charakterisierenden Messgröße mittels Messsensoren unter Gewinnung von wenigstens einem Messsignal;
- Erzeugen von Messwerten aus jedem Messsignal;
- Weiterleiten der Messwerte an eine intelligente elektronische Einheit (IED) (1), die mehrere Prozessorkerne (2) aufweist,
- wobei jede IED (1) wenigstens eine Schutz-, Steuerungs- oder Automatisierungsfunktion (SSAF) (2) aufweist, und
- wobei eine Schutzfunktion die Messwerte auf das Vorliegen wenigstens einer Fehlerbedingungen hin untersucht und bei Vorliegen einer Fehlerbedingung ein Fehlersignal erzeugt, eine Automatisierungsfunktion zur Durchführung von Prozessen innerhalb der Anlage und eine Steuerungsfunktion zur Steurung von Komponenten innerhalb der Anlage eingerichtet sind,
**dadurch gekennzeichnet, dass**
mit Hilfe eines Lastmodells für jede SSAF (2) ein Kernauslastungsgrad ermittelt wird, wobei jede Instanz einer SSAF (3) einem Prozessorkern (2) in Abhängigkeit ihres Kernauslasungsgrades zugeordnet wird.

2. Verfahren nach Anspruch 1 **dadurch gekennzeichnet dass**, das Zuordnen der Instanzen der Schutz- und Automatisierungsfunktionen (2) mit Hilfe eines Knapsackalgorithmus erfolgt.

3. Verfahren nach Anspruch 1 oder 2, **dadurch gekennzeichnet, dass** mehrere physkalisch getrennt voneinander angeordnete IEDs (1) vorgesehen und die Prozessorkerne (3) auf den IEDs (1) verteilt angeordnet sind.

4. Verfahren nach Anspruch 3, **dadurch gekennzeichnet, dass** die SSAF (3) mittels eines Orchestrierungsverfahrens den IEDs (1) dynamisch zugeordnet werden.

5. Verfahren nach einem der Ansprüche 1 oder 2, **dadurch gekennzeichnet, dass** die Prozessorkerne (3) Teil einer zentralen Hardwareeinheit sind.

6. Verfahren nach einem der vorhergehenden Ansprüche, **dadurch gekennzeichnet, dass** das Lastmodell den Kernauslastungsgrad der SSAF (3) im Rahmen einer Konfigurationsphase zur Inbetriebnahme der jeweiligen IED (1) ermittlet.
